# EUROPEAN PATENT APPLICATION

(11) **EP 4 113 673 A1**
(43) Date of publication of application: **04.01.2023**
(21) Application number: 21183442.9
(22) Date of filing: 02.07.2021
(51) Int. Cl.: H01M 8/04007, B64D 41/00, H01M 8/04111, H01M 8/04119, H01M 8/04537, H01M 8/04746

(54) **FUEL CELL SYSTEM**

(71) Applicant: Hamilton Sundstrand Corporation, Charlotte, NC 28217 (US)
(72) Inventor: QUARTARONE, Giusi, Cork (IE); GARCIA GARRIGA, Ana, Cork (IE); ZAVAGLIO, Erica, Cork (IE)
(74) Representative: Dehns

(57) **Abstract**

A fuel cell system comprising: a fuel cell unit (1) having an air inlet (2), a fuel inlet (3) and an electrical energy outlet (4) and a fuel cell exhaust outlet; a turbo-compressor unit (6) to convert air from an air supply to compressed inlet air for the fuel cell unit, the turbo-compressor unit comprising a turbine (6a) and a compressor (6b) connected to a common rotatable shaft (6c), means for obtaining conditioned air (7) exhausted from an enclosed space and directing the conditioned exhaust air to the turbine of turbo-compressor unit such that the conditioned exhaust air is expanded by the turbine causing rotation of the shaft and corresponding rotation of the compressor, means for providing air from the air supply to the compressor to be compressed and output from the compressor unit and provided as compressed inlet air (2) to the air inlet of the fuel cell unit.

## Description

### TECHNICAL FIELD

The present disclosure relates to fuel cell systems particularly for use in enclosed spaces such as aircraft or other vehicles.

### BACKGROUND

Fuel cell systems are used in many applications where electrical energy is required. Fuel cell systems convert chemical energy to electrical energy which can then be used to power other systems or devices. A fuel cell system typically includes an electrolyte which may be a liquid e.g. phosphoric acid, an anode electrode and a cathode electrode including catalysts to promote reaction, and a membrane e.g. a porous exchange membrane, PEM, or a solid between the anode electrode and the cathode electrode. During operation, reactants are supplied to the electrodes. The output power and efficiency of the fuel cell depends on the inlet pressure of air supplied to the fuel cell. The fuel cell therefore needs to be supplied with a source of compressed air.

Recently, consideration has been given to using fuel cell systems in aircraft to improve fuel efficiency and, in turn, to reduce aircraft CO₂ and soot emissions and the environmental impact of aircraft, as well as enable the use of cleaner fuels for their operation. Aircraft include a number of systems, e.g. mechanical systems, environment conditioning systems (ECS), avionics, galleys, emergency power systems, and others that require electric power. Conventionally these systems have been powered from the aircraft engines or the Auxiliary Power Unit (APU). This, however, results in increased fuel consumption which is inefficient and increases the impact on the environment resulting from engine emissions. The use of fuel cell systems to power at least some of these systems/auxiliaries, might improve aircraft efficiency and reduce emissions.

At the same time, designers in the aircraft industry, in seeking to improve efficiency, have looked to ways of using the energy in aircraft cabin air exhaust air. The fresh air from outside is conditioned by an ECS and mixed with cabin recirculated air to ensure that the cabin environment is safe and comfortable for passengers and strict industry criteria have to be satisfied to ensure the quality and condition of this air. Conditioned air is continuously provided to the aircraft interior, and this air has been compressed and temperature controlled. The systems required to condition the air use energy which accounts for a large part of the aircraft energy consumption. This conditioned air, however, is continuously replaced with new conditioned air and is exhausted from the cabin as exhaust or 'out-board' or 'overboard' air - i.e. it is conventionally emitted from the aircraft into the atmosphere. Recently, ways have been considered to make use of the energy contained in this exhaust air, for example in providing thrust benefit or for use in an ECS to reduce the amount of engine air needed. Similar considerations may exist in other vehicle industries.

There is a continued need to improve aircraft or vehicle efficiency, in particular to reduce their environmental impact but also for general reasons of efficiency including economic reasons. There is an increased public policy focus on the reduction of emissions via the introduction of cleaner fuels that can be more easily introduced into a fuel cell system than a traditional engine. There is a need to develop the use of fuel cell systems in aircraft and the like in a more efficient manner to expand their use.

### SUMMARY

The present disclosure provides a fuel cell system comprising: a fuel cell unit having an air inlet, a fuel inlet and an electrical energy outlet and a fuel cell exhaust outlet; a turbo-compressor unit to convert air from an air supply to compressed inlet air for the fuel cell unit, the turbo-compressor unit comprising a turbine and a compressor connected to a common rotatable shaft, means for obtaining conditioned air exhausted from an enclosed space and directing the conditioned exhaust air to the turbine of turbo-compressor unit such that the conditioned exhaust air is expanded by the turbine causing rotation of the shaft and corresponding rotation of the compressor, means for providing air from the air supply to the compressor to be compressed and output from the compressor unit and provided as compressed inlet air to the air inlet of the fuel cell unit.

Also provided is a method of generating electrical energy from a fuel cell system as claimed in any preceding claim, comprising compressing supply air using conditioned exhaust air from an air conditioned enclosed space.

### BRIEF DESCRIPTION

Examples of systems and methods according to the disclosure will now be described. These are purely by way of example only and the true scope of the disclosure is as defined by the claims. The examples are mainly described in relation to aircraft, but the concepts may also be applicable to other applications.
Figure 1 is a schematic view of a system according to the disclosure.
Figure 2 is a schematic view of an alternative example of a system according to the disclosure.

### DETAILED DESCRIPTION

Fuel cells which convert chemical energy of a fuel continuously directly to electrical energy by means of an electrochemical reaction is a clean and efficient power source. Some types of fuel cell have been found to be particularly useful in aircraft and other vehicles. For example, fuel cells using proton exchange membranes (PEM) have a lower operation temperature, high efficiency, low noise and zero pollution. To achieve the power output required for e.g. aircraft, several fuel cells can be combined in a fuel cell stack.

As mentioned above, the power output and efficiency of the fuel cell system depends on the flow of input air. To provide an appropriate air input, the fuel cell system requires an air compressor to compress air from an air supply. The system also typically includes a cooling water circulation system, a humidifier, pumps and electrical control units. Approximately 80% of the power consumed by the fuel cell system ancillary components is due to the air compressor and the compressor power consumption accounts for around 15 - 20 % of the consumption of the overall fuel cell system. In addition to air, hydrogen also needs to be continuously provided to the system. The hydrogen supply system, however, consumes less power than the compressed air supply system and the pressure of the hydrogen supplied to the fuel cell can be easily regulated by a pressure control valve.

The present disclosure provides a fuel cell system which replaces the compressor for the inlet air with a turbo-compressor that uses cabin out-board air to drive the compressor as will be described in more detail below. In this way, the system harnesses some of the energy that has gone into creating the conditioned cabin air and uses it to control the flow of inlet air to the fuel cell/stack, rather than just allowing that energy to be wasted by exhausting the used cabin air to the atmosphere. The cabin out-board air is also preferably used as the air supply that is compressed. As this air was already compressed in being provided to the cabin via the ECS, it should require less compression than fresh air.

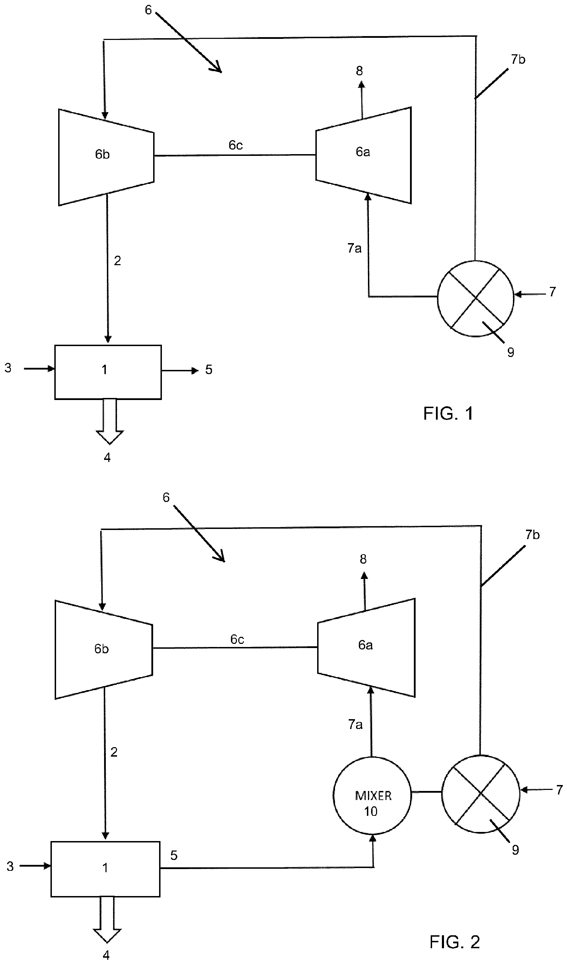

Figure 1 shows one example of a fuel cell system according to this disclosure. The system includes a fuel cell or fuel cell stack 1 which can be of the type known in the art. As reactants, compressed air 2 and hydrogen 3 are provided to the fuel cell as appropriately controlled flow rates/pressures. The internal electrochemical operation of the fuel cell or stack 1 will not be described further here as this is already known in the art. Depending on the required output power, a single fuel cell or a stack of fuel cells may be provided. Whilst PEM fuel cells have been shown to be particularly advantageous for e.g. aircraft, other types of fuel cell, e.g SO fuel cells, may also be used with the system of this disclosure. The chemical reaction in the fuel cell(s) 1 generates electric energy 4 and fuel cell exhaust air 5 is exhausted from the cell/stack 1.

The air 2 supplied to the fuel cell(s) 1 has to be compressed to have the required flow rate/pressure. This is performed by a compressor 6. In one example, not shown, the air to be compressed can be from any known air supply e.g. from engine or fresh air drawn into the system from the atmosphere. In the example shown, the efficiency of the system is further improved by using cabin exhaust air 7 both to drive the compressor 6 and as the air supply to be compressed.

As described above, cabin exhaust air is air that has been conditioned to provide air of an appropriate temperature and pressure for the interior of the passenger cabin but which is then replaced after use by new conditioned air from the aircraft ECS and so is exhausted from the cabin as out-board air 8. The way in which the cabin conditioned air is generated by the ECS and the exhaustion of that air as out-board or cabin exhaust air will not be described further as this is well known in the art.

In the system of the present disclosure, at least a part of the cabin exhaust air is, however, not directly exhausted to the atmosphere but, rather, is used to drive the compressor 6 for providing compressed inlet air to the fuel cell(s) 1.

In the example shown, a portion 7a of the cabin exhaust air is directed to the turbo-compressor 6. The turbo-compressor 6 comprises a turbine 6a and a compressor 6b. In examples where the air to be compressed comes from another source, all of the cabin exhaust air might be sent to the turbine 6a or the portion that is not used to drive the compressor can be directly out-boarded. In the example shown, however, a portion 7a of the cabin exhaust air is sent to the turbine 6a used to drive the compressor 6b and the remainder 7b is sent directly to the compressor 6b to be compressed as described further below.

The turbine 6a and compressor 6b of the turb-compressor 6 are both connected to the same shaft 6c. The (portion of) cabin exhaust air 7a enters the turbine 6a and is expanded by the turbine and the air flow causes the shaft 6c and, therefore the compressor 6b, to rotate. In one example, the turbine may also be provided with a motor to complement the air power in rotating the shaft to provide additional compressor power if needed. If a motor is provided, in a further example, the motor may be arranged and controlled to turn on and off automatically as required. The compressor is therefore driven using power from the cabin exhaust air and is used to compress the air from the air supply to provide as inlet air 2 to the fuel cell(s).

As mentioned above, the air supply may also come from the cabin exhaust air. Here, the remaining portion 7b of the cabin exhaust air 7, which does not go to the turbine 6a, enters the compressor 6b to be compressed thereby and to be provided as compressed air 2 to the fuel cell(s) 1. In this example, a splitter 9 divides the cabin exhaust air 7 into the two portions 7a, 7b.

If the fuel cell is not required to generate power or if the system of this disclosure does not need to provide air to operate the compressor and/or to be compressed, then the cabin exhaust air could bypass the system to be directly dumped as out-board air to the atmosphere as in conventional systems.

By way of example, for such a fuel cell system to replace, say, a 116 kW APU (auxiliary power unit), it requires around 0.15 kgs/s of inlet air flow. The cabin exhaust airflow for a 180 PAX aircraft is around 0.6 kg/s. The airflow entering the turbine would then be 0.6 - 0.15 = 0.45 kg/s. Through expansion, this flow is capable of moving a 30 kW turbine. In order to compress an airflow of 0.15 kg/s to around 2 bar, a compressor would need around 13 kW and so it can be seen that this solution is well able to achieve the required power. There is also capacity within the system to provide higher inlet airflows for higher power systems.

Figure 2 shows another example of the system of this disclosure in which use can also be made of the air 5, or a portion thereof, exhausted from the fuel cell(s) 1. In the example shown, some (or all) of the fuel cell exhaust air 5 can be mixed 10 with a portion of cabin exhaust air 7 before expanding in the turbine 6a thus increasing the available power at the turbine compressor shaft 6c. If this additional power is not needed, the fuel cell exhaust air 5 could be directed for use with other applications. The fuel cell exhaust air will be oxygen depleted because of the chemical reaction in the fuel cell 1 and so could, for example, be used as an insert flow in a fire protection system e.g. in the inerting system, a fire suppression system and/or for tank passivation.

Although the fuel cell exhaust air 5 can be used to increase power as described above, this air does contain moisture which could potentially damage the turbine. In a further example, not shown, means for extracting or reducing moisture from this air could be provided in the system before it is provided to the turbine (before or after the mixer 10). This extracted moisture could, in some examples (not shown), be added back into the system in the inlet air 2 before entering the fuel cell(s) 1. This can improve performance since the inlet air flow influences the humidity of the fuel cell stack. Research has shown that humidification of the inlet airflow (especially the airflow to the cathode) positively affects cell performance. Indeed, the conductivity of the membrane, where present, is closely dependent on the level of hydration of the membrane and the operating temperature. A low membrane water content causes low ionic conductivity leading to high Ohmic losses which can cause significant reduction in fuel cell performance. In conventional fuel cell systems, the reactant gases are generally moistened using a humidifier to maintain a well-hydrated membrane. Cabin exhaust air generally has less moisture than fresh air and so the use of moisture from e.g. the fuel cell exhaust air to add moisture to the inlet air can be advantageous.

According to this disclosure, there is also provided a power management system to select the outlet fuel cell system net power. The fuel cell system may be required to provide different power outputs at different times and according to different power requirements of the loads connected to the system. The system of this disclosure can in some examples, be controlled to control the air inlet flow to the fuel cell(s) to ensure that the required outlet power can be achieved and/or to ensure safe, stable and efficient operation of the system. The power management system can supply inlet air 2 at different air mass flows and air pressure levels to the stack. This can be done by incorporating a passive or active flow control valve into the system. In one example, the splitter 9 could be replaced by such a valve to control the portion of cabin exhaust air 7b entering the fuel cell system, the remainder, 7a, entering the turbine (with or without fuel cell exhaust air). This portioning also then regulates the speed of the turbine and compressor which also affects the inlet air flow. If the pressure level of the inlet air is not at the required level, a motor (not shown) can be controlled to supply additional power to the compressor to enable the production of inlet air at the desired pressure.

Operating temperature and inlet gas temperatures have also been found to be factors significantly affecting the operation and performance of the fuel cell. In another example, therefore, heating could also be provided to bring the temperature of the inlet air to the required level.

The fuel cell system of this disclosure allows a safe and efficient generation of electrical energy using an integral turbo-compressor and air exhausted from the cabin. Additional motor power and/or power from air exhausted from the fuel cell can also be provided if needed. The inlet air flow pressure and/or temperature can be more easily controlled to regulate the output power.

## Claims

1. A fuel cell system comprising:
a fuel cell unit (1) having an air inlet (2), a fuel inlet (3) and an electrical energy outlet (4) and a fuel cell exhaust outlet;
a turbo-compressor unit (6) to convert air from an air supply to compressed inlet air for the fuel cell unit, the turbo-compressor unit comprising a turbine (6a) and a compressor (6b) connected to a common rotatable shaft (6c),
means for obtaining conditioned air (7) exhausted from an enclosed space and directing the conditioned exhaust air to the turbine of turbo-compressor unit such that the conditioned exhaust air is expanded by the turbine causing rotation of the shaft and corresponding rotation of the compressor,
means for providing air from the air supply to the compressor to be compressed and output from the compressor unit and provided as compressed inlet air (2) to the air inlet of the fuel cell unit.

2. The fuel cell system of claim 1, wherein the air supply is the conditioned air exhausted from the enclosed space, such that a first portion of the conditioned air from the enclosed space is provided to the turbine and a second portion is provided to the compressor to be compressed.

3. The fuel cell system of claim 2, comprising a splitter (9) configured to split a supply of conditioned exhaust air from the enclosed space into the first and second portion.

4. The fuel cell of claim 2, comprising a control valve configured to split a supply of conditioned exhaust air from the enclosed space into the first and second portion.

5. The fuel cell system of any preceding claim, further comprising a motor to provide rotation of the compressor.

6. The fuel cell system of any preceding claim, further comprising means for conveying fuel cell exhaust gas from the fuel cell exhaust outlet to a mixer (10) to mix with conditioned air exhausted from the enclosed space such that a mixture of the fuel cell exhaust air and the enclosed space exhaust air is provided to the compressor unit.

7. The fuel cell system of any preceding claim, further comprising means for extracting moisture from air exiting the fuel cell exhaust outlet.

8. The fuel cell system of claim 7, further comprising means for directed the extracted moisture to air provided at the air inlet of the fuel cell unit.

9. The fuel cell system of any preceding claim, further comprising heating means for heating the compressed inlet air.

10. The fuel cell system of any preceding claim, further comprising means for adjusting the pressure of the compressed inlet air based on the required output power of the fuel cell unit.

11. The fuel cell system of any preceding claim wherein the fuel cell unit comprises a fuel cell stack.

12. The fuel cell system of any preceding claim, wherein the enclosed space is an aircraft cabin.

13. A method of generating electrical energy from a fuel cell system as claimed in any preceding claim, comprising compressing supply air using conditioned exhaust air from an air conditioned enclosed space.
